Europäisches Patentamt

European Patent Office

Office européen des brevets

(11) Veröffentlichungsnummer: **0 504 771 A2**

# (12) EUROPÄISCHE PATENTANMELDUNG

(21) Anmeldenummer: **92104471.5**

(51) Int. Cl.5: **G11B 33/04**

(22) Anmeldetag: **16.03.92**

(30) Priorität: **20.03.91 DE 4109153**

(43) Veröffentlichungstag der Anmeldung:
**23.09.92 Patentblatt 92/39**

(84) Benannte Vertragsstaaten:
**AT CH ES FR GB IT LI NL**

(71) Anmelder: **Bitzer, Wolfgang**
**Dorotheenstrasse 4**
**W-7470 Albstadt 2(DE)**

(72) Erfinder: **Bitzer, Wolfgang**
**Dorotheenstrasse 4**
**W-7470 Albstadt 2(DE)**

(74) Vertreter: **Becker, Maria, Dipl.-Phys.**
**Auf dem Haigst 29**
**W-7000 Stuttgart 70(DE)**

(54) **Vorrichtung zur Aufbewahrung von CD-Kassetten.**

(57) Eine Vorrichtung zum Aufbewahren von CD-Kassetten weist vorzugsweise vier in gleicher Ebene liegende Halterungen auf, in die jeweils eine CD-Kassette einsetzbar ist.

Jede Halterung ist durch mindestens zwei zueinander senkrecht angeordnete U- oder I-Profil aufweisende Schienen gebildet, die zusammen ein gleichschenkliges Kreuz bilden. Zwischen die Schenkel der Halterungen sind somit insgesamt vier CD-Kassetten einklemmbar. Die kassettenbestückte Vorrichtung ist hochkant aufstellbar, wobei sie in Verbindung mit den CD-Kassetten ungefähr die Abmessungen einer Schallplattenhülle aufweist.

Fig. 1

EP 0 504 771 A2

Die Erfindung betrifft eine Vorrichtung zur Aufbewahrung von CD-Kassetten.

Die Aufbewahrung von CD-Kassetten ist noch nicht in befriedigender Weise gelöst. Üblicherweise stapelt man diese aufeinander oder stellt sie aufrecht nebeneinander. Aufgrund der relativ grossen Kassettenhöhe benötigt man dabei im Falle aufrecht verwahrter CD-Kassetten für eine verhältnismässig kleine Anzahl unverhältnismässig viel Platz.

Eine grössere Anzahl von CD-Kassetten lässt sich zwar auf verhältnismässig kleinem Raum unterbringen, wenn diese in Reihen hochkant aufeinandergestellt werden; jedoch lässt sich dies praktisch kaum bewerkstelligen.

Die Erfindung schafft eine Möglichkeit der Aufbewahrung, die eine sinnvolle Nutzung des hierfür zur Verfügung stehenden Raumes erlaubt und demgemäss, im Vergleich zur bisher geübten Praxis, auf gleichem Raum ein Vielfaches an CD-Kassetten geordnet unterzubringen gestattet.

Die erfindungsgemässe Vorrichtung zeichnet sich durch mindestens zwei in einer gemeinsamen Ebene liegende Halterungen aus, in die jeweils mindestens eine CD-Kassette einsetzbar ist.

Die erfindungsgemässe Vorrichtung lässt sich derart aufstellen, dass die beiden CD-Kassetten, zueinander festgelegt, entweder hintereinander oder übereinander stehen können.

Hierbei ist es ausreichend, wenn die Halterungen für eine CD-Kassette diese an mindestens zwei zueinander senkrechten Kassettenkanten wenigstens teilweise umgreifen, wobei es günstig ist, die Halterungen derart auszubilden, dass die CD-Kassetten in diesen festklemmbar sind.

Eine fertigungstechnisch einfach herzustellende Konstruktion zeichnet sich dadurch aus, dass deren Halterungen jeweils zwei zueinander senkrechte Schienen mit U- oder I-Profil aufweisen. In diesem Falle können deren Profilschenkel zum Festklemmen von CD-Kassetten dienen.

Bei einer bevorzugten Ausführungsform der Erfindung bilden diese Schienen ein gleichschenkliges Kreuz. Diese Konstruktion bietet den Vorteil, insgesamt vier CD-Kassetten speichern zu können, wobei eine solche kassettenbestückte Vorrichtung dann ungefähr das Format einer Schallplattenhülle hat. Es besteht damit die Möglichkeit, insgesamt vier CD-Kassetten zu speichern und mehrere erfindungsgemässe Vorrichtungen dieser Art, analog zu Schallplattenhüllen, aufrecht nebeinanderzustellen.

Dabei ist es günstig, die jeweils eine Halterung bildenden Schienen zur gegenseitigen Verbindung von Halterungen zusammensteckbar auszubilden. Es besteht dann die Möglichkeit, beispielsweise auch mehrere Kassettenhalterungen hintereinander anzuordnen, wobei man die Anzahl der Kassettenhalterungen entsprechend einer Schranktiefe wählen kann.

In weiterer vorteilhafter Ausgestaltung der Erfindung wird vorgeschlagen, die Halterungen derart auszubilden, dass sich eine Vielzahl nebeneinander anzuordnender Halterungen miteinander verblocken lässt. Dies kann beispielsweise dadurch geschehen, dass die Schenkel der U- oder I-Profil aufweisenden Schienen mit Verbindungselementen ausgestattet sind, die in formschlüssigen Eingriff miteinander gebracht werden können. Solche Verbindungselemente können beispielsweise in Art eines Schwalbenschwanzes bzw. einer Schwalbenschwanzführung ausgebildet sein. Bevorzugt wird man jedoch die Halterungen derart ausbilden, dass sie sich auf eine Steckachse aufstecken und auf dieser gegenseitig verspannen lassen.

Bilden die Halterungen ein gleichschenkliges Kreuz, ergibt sich eine günstige Konstruktion, wenn im Kreuzungsbereich eine Lagerbohrung vorgesehen ist, die vorteilhaft einen Lagerkörper durchsetzt, der zwischen die vier Halterungen eingespannt oder in einer anderen geeigneten Weise befestigt sein kann.

Halterungen dieser Art ermöglichen ausserdem in Verbindung mit einer Steckachse die Herstellung eines Display-Ständers zur Präsentation von CD-Kassetten, sofern jeweils zwischen zwei Halterungen zusätzlich noch eine Distanzhülse auf die Steckachse aufgesteckt wird. In diesem Falle ist die Steckachse mit einem Fuss auszustatten, so dass sie aufrechtstehend angeordnet werden kann. Auf die Steckachse aufgesteckte Halterungen nehmen in diesem Falle eine horizontale Lage ein, wobei aufgrund des Axialabstandes von Halterungen zueinander eine Betrachtungsmöglichkeit für die in diesen gespeicherten CD-Kassetten besteht. Die Halterungen sind hierzu noch relativ zueinander verdrehbar.

In der Zeichnung sind Ausführungsbeipiele der Erfindung dargestellt. Es zeigen:

Fig. 1: eine Draufsicht einer mit CD-Kassetten bestückten Halterung,

Fig. 2: einen Schnitt entlang der Linie II-II der Fig. 1, in grösserem Maßstab,

Fig. 3: den gleichen Schnitt zur Darstellung einer Konstruktionsvariante von Schienen der Halterung.

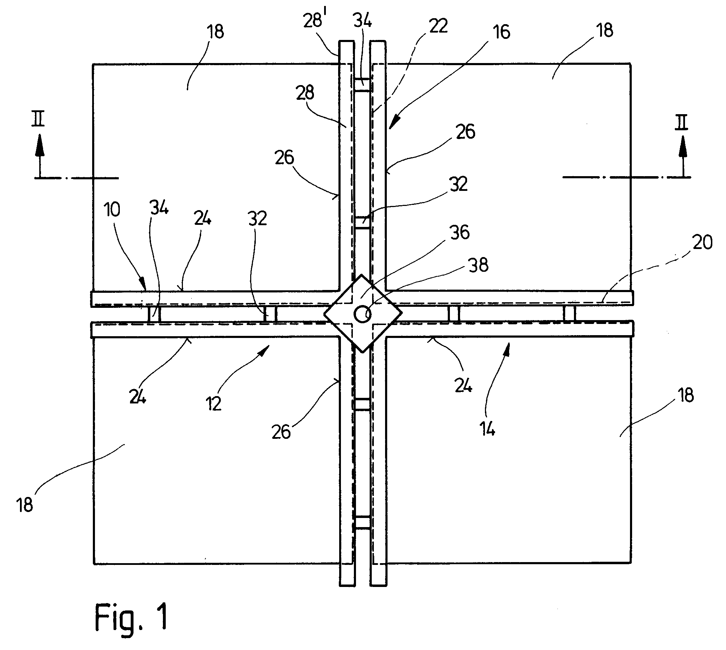

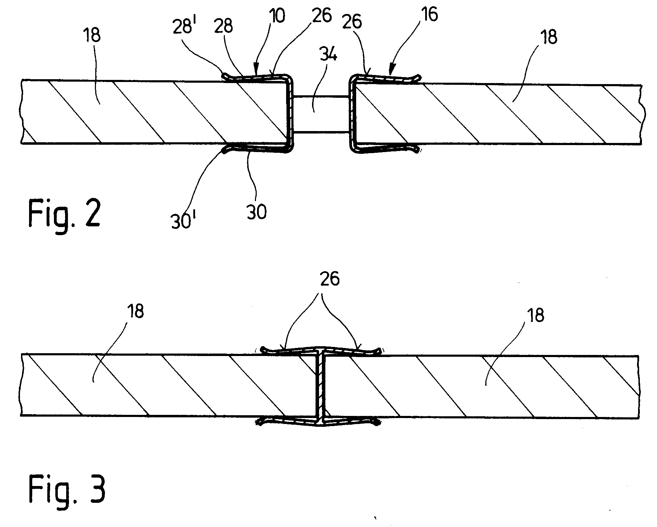

Die in Fig. 1 gezeigte Vorrichtung zur Aufbewahrung von CD-Kassetten weist insgesamt vier Halterungen 10, 12, 14, 16 auf, die miteinander derart verbunden sind, dass sie ein gleichschenkliges Kreuz bilden. Jede Halterung umgreift eine CD-Kassette 18 an zwei zueinander senkrechten Kassettenkanten 20, 22. Jede Halterung ist durch zwei zueinander senkrechte Schienen 24, 26 gebildet, die, gemäss Fig. 2, im Querschnitt beispielsweise U-Profil aufweisen. Die Schenkel 28, 30 dieser U-Profile konvergieren in Richtung ihres Schenkelrandstückes 28' bzw. 30', das leicht in die entgegengesetzte Richtung, also nach aussen, abgebogen ist. Der Schenkelabstand ist dabei derart gewählt, dass eine CD-Kassette 18 zwischen diese einklemmbar ist.

Wie aus Fig. 2 ersichtlich ist, sind einander benachbarte Halterungen 10 - 16 miteinander fest verbunden, was auf verschiedene Weise bewerkstelligt werden kann, beispielsweise durch Stegnieten. Im vorliegenden Falle bestehen die Schienen 24, 26 der Halterungen aus Kunststoff, wobei jeder ihrer Schenkel 28, 30 beispielsweise über zwei Verbindungsstege 32 und 34 mit dem benachbarten Schenkel einer weiteren Halterung fest verbunden ist. Im Kreuzungspunkt der Schienen 24, 26 sämtlicher Halterungen ist ein Lagerkörper 36 gehalten, der von einer senkrecht zur Kassetten-Aufbewahrungsebene angeordneten Lagerbohrung 38 durchsetzt ist. Es besteht damit die Möglichkeit, mehrere gleichschenklige Vorrichtungen auf eine gemeinsame Steckachse aufzustecken und gegeneinander zu verspannen. Die Steckachse selbst kann zwischen zwei Aufnahmeböcken derart gehalten sein, dass es möglich ist, die einander benachbarten Vorrichtungen relativ zueinander zu verdrehen, um die in deren Halterungen 10 - 16 gespeicherten CD-Kassetten 18 entnehmen bzw. wiedereinsetzen zu können.

Alternativ zur Konstruktion gemäss Fig. 1 und 2 können die Schienen 24, 26, gemäss Fig. 3, im Querschnitt auch Doppelprofil aufweisen.

## Patentansprüche

1. Vorrichtung zur Aufbewahrung von CD-Cassetten,

   **gekennzeichnet durch**

   mindestens zwei in einer gemeinsamen Ebene liegende Halterungen (10, 16), in die jeweils mindestens eine CD-Kassette (18) einsetzbar ist.

2. Vorrichtung nach Anspruch 1, dadurch gekennzeichnet, dass die Halterungen (10, 16) eine CD-Kassette (18) an mindestens zwei zueinander senkrechten Kassettenkanten (20, 22) wenigstens teilweise umgreifen.

3. Vorrichtung nach Anspruch 2, dadurch gekennzeichnet, dass die CD-Kassetten (18) in den Halterungen (10, 16) festklemmbar sind.

4. Vorrichtung nach Anspruch 2 oder 3, dadurch gekennzeichnet, dass die Halterungen (10, 16) jeweils zwei zueinander senkrechte Schienen (24, 26) mit U- oder I-Profil aufweisen.

5. Vorrichtung nach Anspruch 4, dadurch gekennzeichnet, dass die CD-Kassetten (18) zwischen die U-Schenkel (28, 30) der Schienen (24, 26) einklemmbar sind.

6. Vorrichtung nach Anspruch 4 oder 5, dadurch gekennzeichnet, dass die Schienen (24, 26) aller Halterungen (10 - 16) ein gleichschenkliges Kreuz bilden.

7. Vorrichtung nach einem der vorhergehenden Ansprüche 4 bis 6, dadurch gekennzeichnet, dass die jeweils eine Halterung bildenden Schienen (24, 26) zur gegenseitigen Verbindung von Halterungen (10 - 16) gegenseitig zusammensteckbar sind.

8. Vorrichtung nach Anspruch 7, dadurch gekennzeichnet, dass die Halterungen (10 - 16) gegenseitig verrastbar sind.

9. Vorrichtung nach einem der vorhergehenden Ansprüche, dadurch gekennzeichnet, dass bei einer lediglich zwei Halterungen (10, 16) aufweisenden Ausbildung in der Mitte zwischen beiden Halterungen (10, 16) ein Lagerkörper (36) angeordnet ist, der von einer senkrecht zur Kassetten-Aufbewahrungsebene angeordneten Lagerbohrung (38) durchsetzt ist.

10. Vorrichtung nach Anspruch 9, dadurch gekennzeichnet, dass bei einer Ausstattung mit insgesamt vier Halterungen (10, 12, 14, 16) der Lagerkörper (36) im Kreuzungsbereich der Schienen (24, 26) angeordnet ist.

11. Vorrichtung nach einem der vorhergehenden Ansprüche 1 bis 5 sowie 7 und 8, dadurch gekennzeichnet, dass die Halterungen Teil eines Display-Ständers sind.

12. Vorrichtung nach einem der vorhergehenden Ansprüche, dadurch gekennzeichnet, dass die Halterungen (10 - 16) in einer vertikalen Ebene angeordnet sind.

13. Vorrichtung, insbesondere nach Anspruch 11, dadurch gekennzeichnet, dass die Halterungen (10 - 16) um eine horizontale oder vertikale Achse schwenkbar sind.

Fig. 1

EP 0 504 771 A2

Fig. 2

Fig. 3